# FASCICULE DE BREVET EUROPEEN

(11) **EP 3 693 432 B1**
(45) Date de publication et mention de la délivrance du brevet: **16.09.2026**
(21) Numéro de dépôt: 20154701.5
(22) Date de dépôt: 30.01.2020
(51) Int. Cl.: C09J 7/38, B32B 5/00, E04B 1/62, B32B 3/26, B32B 5/08, B32B 5/26, B32B 7/12, B32B 27/28, B32B 27/32, B32B 27/34, E04D 12/00, B32B 5/02, B32B 27/12, B32B 27/40

(54) **MEMBRANE PERMÉABLE AUTO-ADHÉSIVE ET PROCÉDÉ DE FABRICATION D'UNE TELLE MEMBRANE PERMÉABLE AUTO-ADHÉSIVE**
SELBSTKLEBENDE DURCHLÄSSIGE MEMBRAN UND HERSTELLUNGSVERFAHREN EINER SOLCHEN SELBSTKLEBENDEN DURCHLÄSSIGEN MEMBRAN
SELF-ADHESIVE PERMEABLE MEMBRANE AND METHOD FOR MANUFACTURING SUCH A SELF-ADHESIVE PERMEABLE MEMBRANE

(30) Priorité: 06.02.2019 FR 1901194
(43) Date de publication de la demande: 12.08.2020
(73) Titulaire: ADHEX TECHNOLOGIES, 21300 Chenôve (FR)
(72) Inventeur: DURAND, Hervé, 21000 DIJON (FR); LLUCH, Hervé, 21700 Chaux (FR); WILLIAMS, Maud, 21000 DIJON (FR); MOUSSIE, Lilian, 21000 DIJON (FR)
(74) Mandataire: Gevers & Orès

(56) Documents cités:
- EP-B1- 1 229 877
- EP-B1- 2 714 830
- WO-A1-2011/163643
- WO-A2-2015/164856
- US-A1- 2015 024 159

## Description

### Domaine technique

La présente invention concerne une membrane auto-adhésive et perméable à la vapeur d'eau et son procédé de fabrication. Une telle membrane est notamment destinée au domaine de la santé pour la réalisation de pansements ou similaire ainsi qu'au domaine de la construction des bâtiments, ladite membrane étant destinée à être appliquée sur des murs et/ou des sous-toitures pour contrôler les flux de vapeur d'eau.

### Etat de la technique

Dans le domaine de la santé, et plus particulièrement dans celui des pansements, il est bien connu que ledit pansement doit de préférence être perméable à la vapeur d'eau (exsudats) afin de laisser respirer la peau entourant la plaie pour éviter toute macération. De plus, dans le domaine de la construction de bâtiments, il est bien connu que les problèmes d'humidité dans les murs sont attribués à un principal mécanisme, à savoir la diffusion de la vapeur d'eau. La diffusion de la vapeur d'eau à travers les murs peut entraîner de nombreux désordres tels que l'effritement de la maçonnerie, le gel des tuyaux, la condensation et l'accumulation de glace dans des cavités, l'humidification des isolants, les rendant inopérants et la croissance de la moisissure notamment.

Le mouvement incontrôlé de la vapeur d'eau à travers l'enveloppe du bâtiment est causé par des différences de pression produites par le vent. Les fuites d'air peuvent provenir de fissures ou de joints défectueux entre les éléments de construction et les éléments de structure ou à travers des matériaux poreux tels que les blocs de béton et les matériaux d'isolation poreux.

Afin de limiter ces problèmes d'humidité, il est usuel d'utiliser des films barrières ou pare-vapeur, comme un film de polyéthylène, pour contrôler le mouvement de la vapeur d'eau dans l'enveloppe du bâtiment. Le film pare-vapeur retarde la diffusion de l'eau à travers l'ensemble des matériaux dans les murs, la vitesse à laquelle la vapeur d'eau migre ou diffuse à travers un matériau dépendant de deux facteurs : la différence entre la pression de vapeur d'eau dans l'air à l'intérieur du bâtiment et la pression de vapeur d'eau dans l'air à l'extérieur du bâtiment et la résistance des matériaux présents à la migration de l'eau par diffusion. Les films pare-vapeur procurent une plus grande résistance à la diffusion de vapeur d'eau que la plupart des autres matériaux. Ainsi, les films de polyéthylène d'une épaisseur suffisante sont les plus couramment utilisés à cette fin; Toutefois, d'autres matériaux tels que le papier d'aluminium ou certaines peintures ou adhésifs ont également été utilisés comme pare-vapeur.

Toutefois, ces films pare-vapeur ne sont pas suffisants et il est nécessaire d'y associer un film barrière afin d'éviter que l'air extérieur ne pénètre dans le bâtiment. En effet, de l'air chargé d'humidité passant à travers une cavité isolée avec un film pare-vapeur peut déposer beaucoup plus d'humidité que le pare-vapeur ne sera capable de diffuser dans le même laps de temps.

Ainsi, des films pare-air perméables à la vapeur d'eau ont été développés tels que les produits commercialisés sous la dénomination Blueskin ^{®} par la société américaine Bakor^{®} consistant en une membrane pare-air, perméable à la vapeur d'eau, hydrorésistante et auto-adhésive. Ces produits correspondent aux produits décrits dans le brevet américain US 6,901,712 déposé par la société Bakor^{®} qui décrit un film pare-air perméable à la vapeur d'eau constitué d'une feuille perméable à la vapeur d'eau, obtenu à partir de polyéthylène et de polyoléfines modifiées, sur une surface de laquelle est appliqué un adhésif en un film non continu.

Bien que ce type de film pare-vapeur ne nécessite pas de moyens de fixations pour fixer ledit film sur un mur ou similaire, l'adhésif de ces films n'est pas perméable à la vapeur d'eau de sorte que cela limite la perméabilité à l'eau du film aux seules parties du film ne comportant pas d'adhésif.

Afin de remédier à cet inconvénient, on a déjà imaginé des films pare-vapeur comportant une couche continue d'adhésif sensible à la pression et perméable à la vapeur d'eau. C'est le cas notamment de la demande de brevet international WO 2009/127819 qui décrit une feuille membranaire perméable auto-adhésive, destinée à être utilisée dans une structure de bâtiment, qui comprend une couche continue d'un adhésif perméable sensible à la pression, attachée sur une surface d'une feuille membranaire perméable. Ladite feuille membranaire est constituée d'une structure laminaire comportant une couche de polypropylène filé-lié, une couche de polyester de type fusion-soufflage et une couche de polypropylène filé-lié et d'une couche d'adhésif sensible à la pression de base comprenant un agent de perméabilité à l'air incluant une résine absorbant l'eau, du polypropylène glycol et de l'eau et un agent de réticulation. On notera que, conformément aux enseignements de l'état de la technique, la couche d'adhésif sensible à la pression ne comporte pas de bulles d'air afin d'éviter une délamination comme il est décrit, notamment, dans les documents EP0670277 et EP2108687 notamment.

On connaît également le document US 2018/066427 qui décrit une membrane de protection pour bâtiment comprenant une feuille de tissu en polypropylène filé lié avec un adhésif sensible à la pression, perméable à la vapeur d'eau, intégré sur la face arrière de la membrane et une matrice de drainage fixée à la surface avant de la membrane, la matrice de drainage comprenant des fils thermoplastiques individuels posés de manière aléatoire pour former un filet et reliés ensemble par thermocollage. Les fils de la matrice forment ainsi des canaux de drainage de l'eau.

Le document US 2015/024159 A1 décrit une membrane de construction avec un revêtement poreux auto-adhésif.

Toutefois, tous ces films pare-vapeur présentent l'inconvénient d'être onéreux à fabriquer et de présenter une perméance qui se dégrade au cours du temps notamment. On entend par perméance l'aptitude d'une membrane ou d'une surface à laisser passer la vapeur d'eau.

Il existe donc un besoin pour une membrane auto-adhésive et perméable à la vapeur d'eau pour la réalisation de films pare-vapeur ou de pansements notamment de conception simple et peu onéreuse procurant une bonne perméance constante dans le temps notamment.

### Exposé de l'invention

L'un des buts de l'invention est donc de remédier à au moins un de ces inconvénients en proposant une membrane auto-adhésive et perméable à la vapeur d'eau pour la réalisation de films pare-vapeur ou de pansements notamment, de conception simple et peu onéreuse, et procurant une bonne perméance constante dans le temps notamment.

A cet effet et conformément à l'invention, il est proposé une membrane perméable à la vapeur d'eau auto-adhésive comprenant au moins un support perméable à la vapeur d'eau et une couche adhésive sensible à la pression, perméable à la vapeur d'eau, et solidaire de la face inférieure dudit support ; ladite membrane est remarquable en ce qu'elle comporte une grille incluse partiellement ou totalement dans la couche adhésive et en ce qu'elle comporte des bulles d'air emprisonnées entre les mailles de la grille qui favorisent la pénétration et la diffusion des molécules de vapeur d'eau.

Avantageusement, la membrane perméable à la vapeur d'eau auto-adhésive comprend un film protecteur anti-adhérent.

Selon un mode de réalisation, la couche adhésive présente une épaisseur supérieure ou égale à l'épaisseur de la grille.

De préférence, la grille présente une épaisseur comprise entre 30 µm et 150 µm.

Par ailleurs, la grille présente une contexture en chaîne et en trame inférieure ou égale à 10 fils/cm et inférieure à 10 fils/cm respectivement.

De plus, les fils de trame et de chaîne de la grille présentent respectivement un dtex compris entre 10 et 400.

Les fils de trame et les fils de chaîne de la grille sont obtenus dans un polymère thermoplastique.

Lesdits fils de trame et les fils de chaîne de la grille sont obtenus dans du polytéréphtalate d'éthylène (PET) et/ou du polypropylène (PP) et/ou du polyamide (PA).

De manière alternative, les fils de trame et les fils de chaîne de la grille sont obtenus dans des fibres de verre.

Accessoirement, les fibres de verre des fils de trame et des fils de chaîne sont imprégnées par au moins un polymère thermoplastique.

Ledit polymère thermoplastique est choisi parmi la liste suivante : éthylène-acétate de vinyle (EVA) et/ou polychlorure de vinyle (PVC) et/ou polyalcool vinylique (PVAL) et/ou polyacétate de vinyle (PVAC).

Un autre objet de l'invention concerne un procédé de fabrication d'une membrane perméable à la vapeur d'eau auto-adhésive comprenant au moins un support perméable à la vapeur d'eau et une couche adhésive sensible à la pression, perméable à la vapeur d'eau, et solidaire de la face inférieure dudit support ; ledit procédé est remarquable en ce qu'il comporte au moins les étapes suivantes de :
- enduction d'une couche d'adhésif sensible à la pression sur un film protecteur anti-adhérent, ladite couche adhésive sensible à la pression étant perméable à la vapeur d'eau ;
- durcissement de ladite couche d'adhésif sensible à la pression ;
- dépose d'une grille sur ladite couche d'adhésif sensible à la pression durcie ; et
- complexage de la couche d'adhésif sensible à la pression durcie et de la grille sur un support perméable à la vapeur d'eau.

Selon une première variante d'exécution, la couche d'adhésif sensible à la pression est obtenue dans un adhésif sensible à la pression acrylique avec solvant.

Dans cette variante d'exécution, l'étape de durcissement de ladite couche d'adhésif sensible à la pression consiste en une étape de séchage de ladite couche d'adhésif.

Selon une seconde variante d'exécution, la couche d'adhésif sensible à la pression est obtenue dans un adhésif sensible à la pression du type hot melt acrylique réticulable.

Dans cette seconde variante d'exécution, l'étape de durcissement de ladite couche d'adhésif sensible à la pression consiste en une étape de réticulation de ladite couche d'adhésif.

Ladite étape de réticulation consiste, de préférence, en une réticulation par irradiation UV.

### Brève description des dessins

D'autres avantages et caractéristiques ressortiront mieux de la description qui va suivre de plusieurs variantes d'exécution, données à titre d'exemples non limitatifs, de la membrane perméable à la vapeur d'eau auto-adhésive et de son procédé de fabrication conforme à l'invention, en référence aux dessins annexés sur lesquels :
- la figure 1 est une vue en coupe schématique de la membrane perméable à la vapeur d'eau auto-adhésive suivant l'invention,
- la figure 2 est une vue de dessus d'une grille de la membrane perméable à la vapeur d'eau auto-adhésive suivant l'invention,
- les figures 3a à 3e sont des vues en coupes schématiques des différentes étapes du procédé de fabrication de la membrane perméable à la vapeur d'eau auto-adhésive suivant l'invention.

### Mode de réalisation de l'invention

Par souci de clarté, dans la suite de la description, les mêmes éléments ont été désignés par les mêmes références aux différentes figures. De plus, les diverses vues ne sont pas nécessairement tracées à l'échelle.

On décrira ci-après une membrane perméable à la vapeur d'eau auto-adhésive destinée à la réalisation d'un film pare-vapeur pour bâtiment ; toutefois, il est bien évident que ladite membrane perméable à la vapeur d'eau auto-adhésive suivant l'invention pourra être utilisée pour toute autre application, notamment pour la fabrication de pansements, sans pour autant sortir du cadre de l'invention.

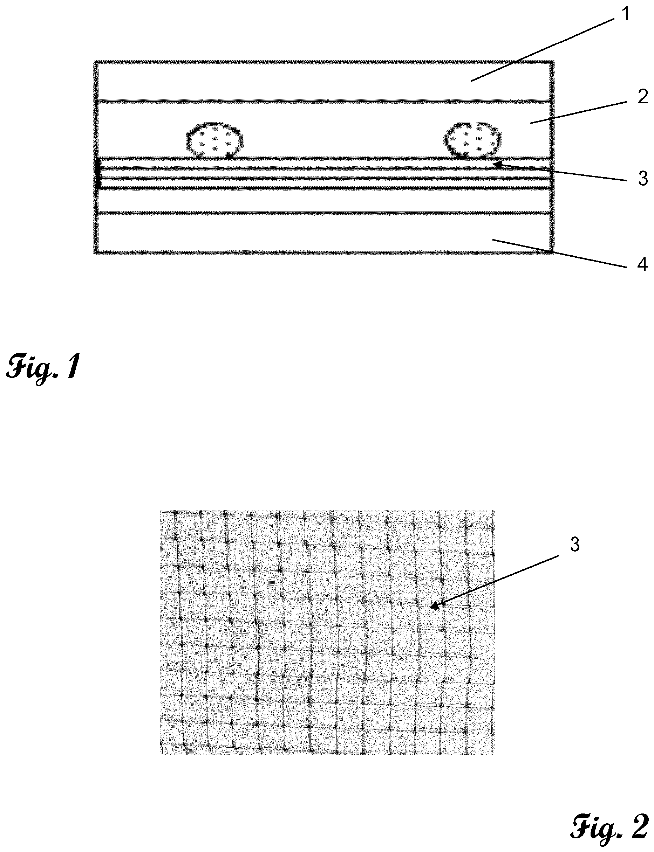

En référence à la figure 1, la membrane perméable à la vapeur d'eau auto-adhésive suivant l'invention comprend au moins un support 1 perméable à la vapeur d'eau, une couche adhésive 2 sensible à la pression, perméable à la vapeur d'eau, et solidaire de la face inférieure dudit support 1, une grille 3 incluse dans la couche adhésive 2 dont l'épaisseur est supérieure ou égale à l'épaisseur de la grille 3, des bulles d'air étant avantageusement emprisonnées entre les mailles de la grille 3 favorisant ainsi la pénétration et la diffusion des molécules de vapeur d'eau, et un film protecteur anti-adhérent 4.

On observera que, pour certaines applications, notamment dans le domaine de la santé, la couche adhésive 2 pourra présenter une épaisseur inférieure à l'épaisseur de la grille 3 sans pour autant sortir du cadre de l'invention.

Ledit support 1 consiste par exemple en un film de polyéthylène (PE) micro-perforé, un film de polypropylène (PP) micro-perforé, un film copolymère polyéthylène(PE)/polypropylène(PP) micro-perforé, un film polyéthylène (PE) chargé et étiré, un film de polypropylène (PP) chargé et étiré, un film de copolymères polyéthylène(PE)/polypropylène(PP) chargé et étiré, un film thermoplastique polyuréthane extrudé (TPU) à base de polyéther, un film thermoplastique respirant à base polyuréthane et base polyéther-bloc amide, un film en polyamide 6-6 (PA 6-6) ou une combinaison desdits films.

Alternativement, ledit support est un support non tissé à base de fibres synthétiques choisies parmi le polyéthylène (PE), le polypropylène (PP), le polyéthylène téréphtalate (PET) et le polyamide (PA) ou une combinaison de celles-ci.

Selon une autre variante d'exécution, ledit support pourra consister en un film laminaire comprenant au moins deux films tissés ou non tissés tels que décrit précédemment.

La couche adhésive 2 consiste en un adhésif acrylique hotmelt réticulé par UV et tackifié et présente une masse surfacique comprise entre 30 et 160 g/m² et, de préférence, une masse surfacique de 130 g/m². Cette couche adhésive 2 présente une épaisseur inférieure ou égale à 200 µm, et de préférence, une épaisseur de 130 µm. Ladite couche adhésive 2 est obtenue dans un adhésif sensible à la pression, de préférence polaire, et de préférence réticulé. Par ailleurs, ledit adhésif est de préférence à base acrylique. Par exemple, ledit adhésif pourra consister dans un adhésif acrylique auto-réticulant en phase solvant commercialisé par la société Henkel corporation sous la référence LOCTITE DURO-TAK 222A, LOCTITE DURO-TAK 1847, LOCTITE DURO-TAK 737, LOCTITE DURO-TAK 3954, DUROTAK 380-1053, ou par la société AV Chemie sous la référence Polytex SP 2085.

Plus précisément, ledit adhésif pourra consister dans un adhésif acrylique auto-réticulant en phase solvant à base de copolymères d'acrylates (copolymères carboxyles à base des esters acryliques) obtenus par la polymérisation de monomères acryliques tels que : acrylate de méthyle, acrylate d'éthyle, acrylate de 2-éthylhexyle, acrylate de n-butyle, acrylate de 2-hydroxyéthyle, ou similaires. La réticulation pourra être obtenue par ajout de tout agent de réticulation bien connu de l'homme du métier tel qu'un chellate métallique ou l'acétylacétonate=tris (2,4-pentanedionato-O, O') d'aluminium par exemple.

On observera que la viscosité et le comportement rhéologique de l'adhésif pourront aisément être ajustés par les systèmes solvants hydrocarbures aromatique et aliphatique, tels que les solvants alcooliques (méthanol, éthanol, propanol 2), les solvants cétoniques (acétone, méthyléthylcétone, pentane-2,4 dione), les solvants aromatiques (toluène), les solvants aliphatiques cycliques (cyclohexane, méthylcyclohexane), les solvants aliphatiques (hexane et isomères, n-heptane, octane et isomères), afin d'obtenir une viscosité Brookfield comprise entre 1000 mPa.s et 50000 mPa.s (LVT 3/12 rpm).

De préférence, ledit adhésif est un adhésif acrylique hotmelt réticulé par UV commercialisé par la société Basf sous la gamme Ac Resin^{®}, tackifié ou non avec des résines tackifiantes type esters de colophane hydrogénée (référence Hydrogral G commercialisée par la société DRT) ou des résines hydrocarbonées telles que les résines commercialisées par la société Eastman sous la référence Kristalex F85.

On notera que tous ces adhésifs sont perméables à la vapeur d'eau. En particulier, l'adhésif Ac Resin^{®} A 250 UV présente une perméabilité à la vapeur d'eau de 949 g/m²/24h.

Par ailleurs, en référence aux figures 1 et 2, la grille 3 présente une épaisseur comprise entre 30 µm et 150 µm, ainsi qu'une maille comprise entre 1x1 et 10x10 mm. Les fils de trame et les fils de chaîne de la grille 3 sont obtenus dans un polymère thermoplastique tel que du polytéréphtalate d'éthylène (PET) et/ou du polypropylène (PP) et/ou du polyamide (PA), les fils de trame présentant de préférence un dtex compris entre 10 et 400 et les fils de chaîne présentant de préférence un dtex compris entre 10 et 400. De manière alternative, les fils de trame et les fils de chaîne de la grille sont obtenus dans des fibres de verre qui pourront avantageusement être imprégnées par au moins un polymère thermoplastique tel que l'éthylène-acétate de vinyle (EVA) et/ou le polychlorure de vinyle (PVC) et/ou le polyalcool vinylique (PVAL) et/ou le polyacétate de vinyle (PVAC). La nature du traitement à la surface des fils peut influer sur la compatibilité chimique de la grille 3 avec les adhésifs, ainsi qu'avec les agents tackifiants.

On observera que, par conception, une grille est construite comme un assemblage de fils de chaînes (sens longitudinal) collés sur/sous des fils de trame (sens transversal). Afin de réduire l'épaisseur totale de la grille, cette liaison n'est généralement réalisée que sur un seul côté de la maille. Les chevauchements résultant constituent autant de points de jonction, créant des saillies ponctuelles en relief sur un seul côté. De fait, une grille support, contrairement à un film support ou un non tissé support, présente une morphologie différente entre sa face vue et sa face cachée. Les points de jonction ont une épaisseur au moins égale à la somme des épaisseurs d'un fil de trame et d'un fil de chaîne adjacent, augmentée de la couche de colle liant le fil de trame avec le fil de chaîne adjacent (plusieurs dizaines de µm). De plus, les fils d'une grille étant relativement souples, ils ne sont ni véritablement alignées, ni équidistants. Une grille peut donc être définie comme un support souple hétérogène et anisotrope. Ses caractéristiques dépendent de son orientation (sens longitudinal ou sens transversal) et de la face considérée (face vue ou face cachée).

Le tableau ci-dessous résume les caractéristiques de grilles de renfort fine et conformable de la membrane suivant l'invention. Leur épaisseur est inférieure à 150 µm. Leur contexture en chaîne et en trame est respectivement inférieure à 10 fils/cm et inférieure à 10 fils/cm.

| **Composition Chimique** | **Résistance à la rupture (N/cm)** | **Allongement à la rupture (%)** | **Imprégnation** |
|---|---|---|---|
| PE PP - Copo PP | < 10 | > 40 | EVA |
| PA PET | < 20 | > 20 | EVA, PVAc, PVC, PVOH |
| Fibre de verre | > 100 | ≤ 4 | PVOH, EVA, PVAc |

Pour l'application à une membrane pare-vapeur dans le domaine du bâtiment, une grille 3 en fibres de verre est préférée.

Un exemple pour une application dans le domaine du bâtiment comprend :
- une grille textile fibre de verre commercialisée par la société Porcher Industries sous la référence D4208C058 possédant une épaisseur de 90 µm et une imprégnation de PVAc ;
- un adhésif Ac Resin 250 UV, épaisseur 130 µm, dose UV de 130 mJ/cm² pour réticuler ;
- un support en non tissé de PEHD commercialisé par la société Dupont de Nemours sous la référence Tyvek 1058D.

Pour l'application à un dispositif médical ou à un de ses composants dans le domaine de la santé, une grille 3 en Polyester est préférée.

Un exemple pour une application dans le domaine de la santé comprend :
- une grille en PET commercialisée par la société DYLCO sous la référence 92183 présentant une épaisseur de 95 µm et une contexture en chaîne de 7.2 fils/cm et une contexture en trame de 3.5 fils/cm ;
- un adhésif acrylique auto-réticulant en phase solvant commercialisé par la société Henkel Corporation sous la référence LOCTITE DURO-TAK 737 : épaisseur 50 µm ;
- un support non tissé en PET commercialisé par la société Freudenberg sous la référence Viledon M1535 présentant un grammage surfacique de 60 g/m².

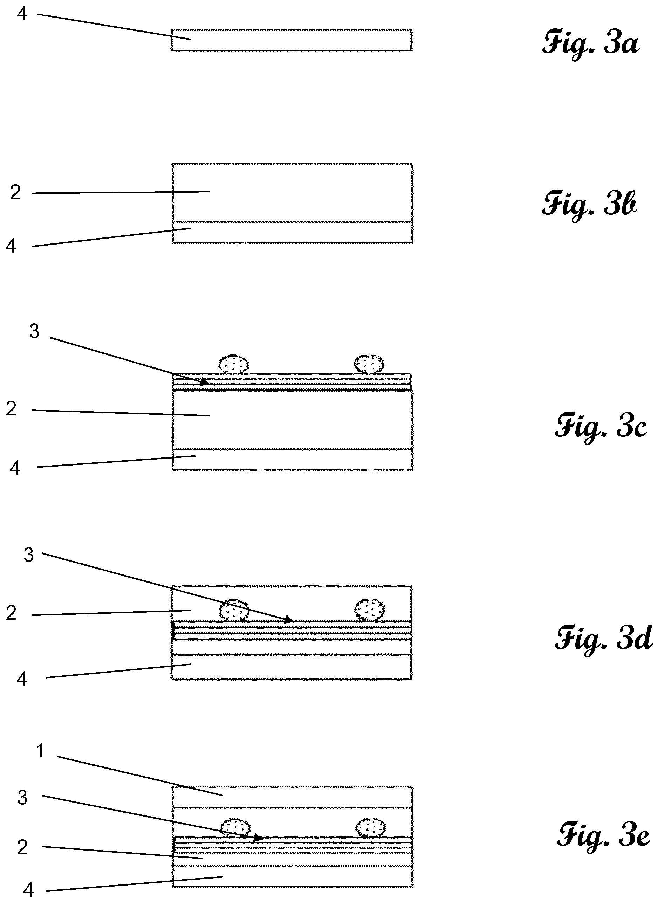

On expliquera maintenant le procédé de fabrication de la membrane perméable à la vapeur d'eau auto-adhésive suivant l'invention en référence aux figures 3a à 3e.

Ledit procédé consiste, à partir d'un film protecteur anti-adhérent 4 (figure 3a), à enduire ledit film protecteur anti-adhérent 4 d'une couche d'adhésif 2 sensible à la pression, ladite couche adhésive sensible à la pression 2 étant perméable à la vapeur d'eau, en référence à la figure 3b. Ensuite, le procédé comporte une étape de durcissement de ladite couche d'adhésif sensible à la pression 2 (figure 3b) avant une étape de dépôt (figure 3c) d'une grille 3 sur ladite couche d'adhésif sensible à la pression 2 durcie. Ladite grille pénètre partiellement ou totalement dans la couche d'adhésif sensible à la pression 2 durcie (figure 3d). Puis le procédé comporte une étape de complexage (figure 3e) de la couche d'adhésif sensible à la pression 2 durcie et de la grille 3 sur un support 1 perméable à la vapeur d'eau.

Par exemple, dans la phase de complexage du procédé d'enduction par transfert, l'homme du métier choisira de préférence une pression de complexage sur le cylindre presseur inférieure à 5 bars et/ou une température du cylindre de pressage inférieure à 10°C, le cylindre presseur comprenant un revêtement en caoutchouc ou similaire présentant de préférence une dureté inférieure ou égale à 80 Shore A, pour éviter de chasser l'air et permettre la formation des bulles d'air emprisonnées entre les mailles de la grille.

Toutefois, il est bien évident que l'homme du métier pourra aisément adapter les paramètres, en pression et en température du complexage notamment, en fonction de la composition de la couche adhésive et de la grille sans pour autant sortir du cadre de l'invention.

Selon une première variante d'exécution, la couche d'adhésif sensible à la pression est obtenue dans un adhésif sensible à la pression acrylique avec solvant.

Dans cette variante d'exécution, l'étape de durcissement de ladite couche d'adhésif sensible à la pression consiste en une étape de séchage de ladite couche d'adhésif. Cette étape de séchage consiste dans le passage de la couche adhésive, en sortie du tunnel d'enduction, à travers plusieurs caissons de séchage dont les températures varient de 70°C à 140°C afin d'évaporer les solvants, le taux de solvant résiduel devant être inférieur à 1%, et de préférence inférieur à 0.5%.

Selon une seconde variante d'exécution, la couche d'adhésif sensible à la pression est obtenue dans un adhésif sensible à la pression du type hot melt acrylique réticulable.

Dans cette seconde variante d'exécution, l'étape de durcissement de ladite couche d'adhésif sensible à la pression consiste en une étape de réticulation de ladite couche d'adhésif. Par exemple, la réticulation est réalisée par irradiation UV. Pour une couche adhésive Ac resin 250 UV telle que décrite précédemment, la réticulation est réalisée par irradiation UV au moyen d'une lampe UV à bulbe de mercure délivrant une dose UVC de 50 mJ/cm2 pour une épaisseur d'adhésif de 50 µm et de 130 m/cm2 pour une épaisseur d'adhésif de 130 µm.

Enfin, il est bien évident que les exemples que l'on vient de donner ne sont que des illustrations particulières en aucun cas limitatives quant aux domaines d'application de l'invention.

## Revendications

1. Membrane perméable à la vapeur d'eau auto-adhésive comprenant au moins un support (1) perméable à la vapeur d'eau et une couche adhésive sensible à la pression (2), perméable à la vapeur d'eau, et solidaire de la face inférieure dudit support (1),
**caractérisée en ce qu'**elle comporte une grille (3) incluse partiellement ou totalement dans la couche adhésive (2) et **en ce qu'**elle comporte des bulles d'air emprisonnées entre les mailles de la grille (3) qui favorisent la pénétration et la diffusion des molécules de vapeur d'eau.

2. Membrane suivant la revendication 1,
**caractérisée en ce que** la couche adhésive (2) présente une épaisseur supérieure ou égale à l'épaisseur de la grille (3).

3. Membrane suivant l'une quelconque des revendications 1 ou 2,
**caractérisée en ce que** la grille (3) présente une épaisseur comprise entre 30 µm et 150 µm.

4. Membrane suivant l'une quelconque des revendications 1 à 3,
**caractérisée en ce que** la grille (3) présente une contexture en chaîne et en trame inférieure ou égale à 10 fils/cm et inférieure à 10 fils/cm respectivement.

5. Membrane suivant l'une quelconque des revendications 1 à 4,
**caractérisée en ce que** les fils de trame et de chaîne de la grille (3) présentent respectivement un dtex compris entre 10 et 400.

6. Membrane suivant l'une quelconque des revendications 1 à 5,
**caractérisée en ce que** les fils de trame et les fils de chaîne de la grille (3) sont obtenus dans un polymère thermoplastique.

7. Membrane suivant la revendication 6,
**caractérisée en ce que** les fils de trame et les fils de chaîne de la grille (3) sont obtenus dans du polytéréphtalate d'éthylène (PET) et/ou du polypropylène (PP) et/ou du polyamide (PA).

8. Membrane suivant l'une quelconque des revendications 1 à 5,
**caractérisée en ce que** les fils de trame et les fils de chaîne de la grille (3) sont obtenus dans des fibres de verre.

9. Membrane suivant la revendication 8,
**caractérisée en ce que** les fibres de verre des fils de trame et des fils de chaîne sont imprégnées par au moins un polymère thermoplastique.

10. Membrane suivant la revendication 9,
**caractérisée en ce que** ledit polymère thermoplastique est choisi parmi la liste suivante : éthylène-acétate de vinyle (EVA) et/ou polychlorure de vinyle (PVC) et/ou polyalcool vinylique (PVAL) et/ou polyacétate de vinyle (PVAC).

11. Procédé de fabrication d'une membrane perméable à la vapeur d'eau auto-adhésive suivant l'une quelconque des revendications 1 à 10,
**caractérisé en ce qu'**il comporte au moins les étapes suivantes de :
- enduction d'une couche d'adhésif sensible à la pression (2) sur un film protecteur anti-adhérent (4), ladite couche adhésive sensible à la pression (2) étant perméable à la vapeur d'eau ;
- durcissement de ladite couche d'adhésif sensible à la pression (2) ;
- dépose d'une grille (3) sur ladite couche d'adhésif sensible à la pression (2) durcie ; et
- complexage de la couche d'adhésif sensible à la pression (2) durcie et de la grille (3) sur un support (1) perméable à la vapeur d'eau.

12. Procédé suivant la revendication 11,
**caractérisé en ce que** la couche d'adhésif sensible à la pression (2) est obtenue dans un adhésif sensible à la pression acrylique avec solvant.

13. Procédé suivant les revendications 11 et 12,
**caractérisé en ce que** l'étape de durcissement de ladite couche d'adhésif sensible à la pression (2) consiste en une étape de séchage de ladite couche d'adhésif.

14. Procédé suivant la revendication 11,
**caractérisé en ce que** la couche d'adhésif sensible à la pression (2) est obtenue dans un adhésif sensible à la pression du type hot melt acrylique réticulable.

15. Procédé suivant les revendications 11 et 14,
**caractérisé en ce que** l'étape de durcissement de ladite couche d'adhésif sensible à la pression (2) consiste en une étape de réticulation de ladite couche d'adhésif (2).

16. Procédé suivant la revendication 15,
**caractérisé en ce que** l'étape de réticulation consiste en une réticulation par irradiation UV.

## Patentansprüche

1. Selbstklebende, wasserdampfdurchlässige Membran, umfassend mindestens einen wasserdampfdurchlässigen Träger (1) und eine druckempfindliche Klebeschicht (2), wasserdampfdurchlässig und mit der unteren Fläche des Trägers (1) fest verbunden,
**dadurch gekennzeichnet, dass** sie ein Gitter (3) umfasst, das teilweise oder vollständig in der Klebeschicht (2) eingeschlossen ist, und dadurch, dass sie zwischen den Maschen des Gitters (3) gefangene Luftblasen umfasst, die die Durchdringung und die Diffusion von Wasserdampfmolekülen begünstigen.

2. Membran nach Anspruch 1,
**dadurch gekennzeichnet, dass** die Klebeschicht (2) eine Dicke größer als oder gleich der Dicke des Gitters (3) aufweist.

3. Membran nach einem der Ansprüche 1 oder 2,
**dadurch gekennzeichnet, dass** das Gitter (3) eine Dicke zwischen 30 µm und 150 µm aufweist.

4. Membran nach einem der Ansprüche 1 bis 3,
**dadurch gekennzeichnet, dass** das Gitter (3) eine Kett- und Schussfadenzahl von jeweils kleiner als oder gleich 10 Fäden/cm und kleiner als 10 Fäden/cm aufweist.

5. Membran nach einem der Ansprüche 1 bis 4,
**dadurch gekennzeichnet, dass** die Schuss- und Kettfäden des Gitters (3) jeweils ein dtex zwischen 10 und 400 aufweisen.

6. Membran nach einem der Ansprüche 1 bis 5,
**dadurch gekennzeichnet, dass** die Schussfäden und die Kettfäden des Gitters (3) aus einem thermoplastischen Polymer erhalten werden.

7. Membran nach Anspruch 6,
**dadurch gekennzeichnet, dass** die Schuss- und Kettfäden des Gitters (3) aus Polyethylenterephthalat (PET) und/oder Polypropylen (PP) und/oder Polyamid (PA) erhalten werden.

8. Membran nach einem der Ansprüche 1 bis 5,
**dadurch gekennzeichnet, dass** die Schuss- und Kettfäden des Gitters (3) aus Glasfasern erhalten werden.

9. Membran nach Anspruch 8,
**dadurch gekennzeichnet, dass** die Glasfasern der Schussfäden und der Kettfäden mit mindestens einem thermoplastischen Polymer imprägniert sind.

10. Membran nach Anspruch 9,
**dadurch gekennzeichnet, dass** das thermoplastische Polymer ausgewählt ist aus der folgenden Liste: Ethylen-Vinylacetat (EVA) und/oder Polyvinylchlorid (PVC) und/oder Polyvinylalkohol (PVAL) und/oder Polyvinylacetat (PVAC).

11. Verfahren zur Herstellung einer selbstklebenden, wasserdampfdurchlässigen Membran nach einem der Ansprüche 1 bis 10,
**dadurch gekennzeichnet, dass** es mindestens die folgenden Schritte umfasst:
- Beschichten einer druckempfindlichen Klebeschicht (2) auf eine Antihaft-Schutzfolie (4), wobei die druckempfindliche Klebeschicht (2) wasserdampfdurchlässig ist;
- Härten der druckempfindlichen Klebeschicht (2);
- Ablegen eines Gitters (3) auf die gehärtete druckempfindliche Klebeschicht (2); und
- Kaschieren der gehärteten druckempfindlichen Klebeschicht (2) und des Gitters (3) auf einem wasserdampfdurchlässigen Träger (1).

12. Verfahren nach Anspruch 11,
**dadurch gekennzeichnet, dass** die druckempfindliche Klebeschicht (2) aus einem acrylischen druckempfindlichen Kleber mit Lösungsmittel erhalten wird.

13. Verfahren nach Ansprüchen 11 und 12,
**dadurch gekennzeichnet, dass** der Schritt des Härtens der druckempfindlichen Klebeschicht (2) aus einem Schritt des Trocknens der Klebeschicht besteht.

14. Verfahren nach Anspruch 11,
**dadurch gekennzeichnet, dass** die druckempfindliche Klebeschicht (2) aus einem acrylischen vernetzbaren druckempfindlichen Kleber vom Heißschmelztyp erhalten wird.

15. Verfahren nach Ansprüchen 11 und 14,
**dadurch gekennzeichnet, dass** der Schritt des Härtens der druckempfindlichen Klebeschicht (2) aus einem Schritt des Vernetzens der Klebeschicht (2) besteht.

16. Verfahren nach Anspruch 15,
**dadurch gekennzeichnet, dass** der Schritt des Vernetzens aus einem Vernetzen durch UV-Strahlung besteht.

## Claims

1. Self-adhesive water vapour-permeable membrane comprising at least one water vapour-permeable support (1) and a pressure-sensitive adhesive layer (2), water vapour-permeable, and integral with the lower face of said support (1),
**characterized in that** it comprises a grid (3) included partially or totally in the adhesive layer (2) and **in that** it comprises air bubbles confined between the meshes of the grid (3) which favour the penetration and the diffusion of the water vapour molecules.

2. Membrane according to claim 1,
**characterized in that** the adhesive layer (2) presents a thickness greater than or equal to the thickness of the grid (3).

3. Membrane according to anyone of claims 1 or 2,
**characterized in that** the grid (3) presents a thickness comprised between 30 µm and 150 µm.

4. Membrane according to anyone of claims 1 to 3,
**characterized in that** the grid (3) presents a string and weave construction less than or equal to 10 strands/cm and less than 10 strands/cm, respectively.

5. Membrane according to anyone of claims 1 to 4,
**characterized in that** the weave and string strands of the grid (3) respectively present a dtex comprised between 10 and 400.

6. Membrane according to anyone of claims 1 to 5,
**characterized in that** the weave strands and the string strands of the grid (3) are obtained in a thermoplastic polymer.

7. Membrane according to claim 6,
**characterized in that** the weave strands and the string strands of the grid (3) are obtained in polyethylene terephthalate (PET) and/or polypropylene (PP) and/or polyamide (PA).

8. Membrane according to anyone of claims 1 to 5,
**characterized in that** the weave strands and the string strands of the grid (3) are obtained in glass fibres.

9. Membrane according to claim 8,
**characterized in that** the glass fibres of the weave strands and the string strands are impregnated by at least one thermoplastic polymer.

10. Membrane according to claim 9,
**characterized in that** said thermoplastic polymer is chosen from among the following list: ethylene vinyl acetate (EVA) and/or polyvinyl chloride (PVC) and/or polyvinyl alcohol (PVAL) and/or polyvinyl acetate (PVAC).

11. Method for producing a self-adhesive water vapour-permeable membrane according to anyone of claims 1 to 10,
**characterized in that** it comprises at least the following steps of:
- coating a pressure-sensitive adhesive layer (2) on a non-stick protective film (4), said pressure-sensitive adhesive layer (2) being water vapour-permeable;
- hardening of said pressure-sensitive adhesive layer (2);
- depositing of a grid (3) on said hardened pressure-sensitive adhesive layer (2); and
- laminating the hardened pressure-sensitive adhesive layer (2) and the grid (3) on a water vapour-permeable support (1).

12. Method according to claim 11,
**characterized in that** the pressure-sensitive adhesive layer (2) is obtained in an acrylic pressure-sensitive adhesive with solvent.

13. Method according to claims 11 and 12,
**characterized in that** the step of hardening said pressure-sensitive adhesive layer (2) consists in a step of drying said adhesive layer.

14. Method according to claim 11,
**characterized in that** the pressure-sensitive adhesive layer sensitive to pressure (2), is obtained in a pressure-sensitive adhesive, of the crosslinkable acrylic hotmelt-type.

15. Method according to claims 11 and 14,
**characterized in that** the step of hardening said pressure-sensitive adhesive layer (2), consists in a step of crosslinking said adhesive layer (2).

16. Method according to claim 15,
**characterized in that** the crosslinking step consists in a crosslinking via UV irradiation.
